# EUROPÄISCHE PATENTSCHRIFT

(11) **EP 1 211 375 B1**
(45) Veröffentlichungstag und Bekanntmachung des Hinweises auf die Patenterteilung: **01.02.2006**
(21) Anmeldenummer: 01126086.6
(22) Anmeldetag: 02.11.2001
(51) Int. Cl.: F16F 9/516, E05F 5/02

(54) **Brems- und Dämpfungselement für bewegliche Möbelteile**
Braking and damping element for mobile furniture parts
Element de freinage et d'amortissement pour des parties de meuble mobiles

(30) Priorität: 06.11.2000 DE 10054904
(43) Veröffentlichungstag der Anmeldung: 05.06.2002
(73) Patentinhaber: Grass GmbH, 6973 Höchst/Vlbg. (AT)
(72) Erfinder: Müller, Wolfgang, 6890 Lustenau (AT)
(74) Vertreter: Riebling, Peter

(56) Entgegenhaltungen:
- EP-A- 0 002 144
- DE-A- 3 729 597
- DE-A- 4 212 079
- US-A- 5 799 759

## Beschreibung

Die Erfindung betrifft ein Brems- und Dämpfungselement für bewegliche Möbelteile nach dem Oberbegriff des Patentanspruchs 1.

Brems- und Dämpfungselemente sind in vielfältigen Ausführungsformen in der Technik bekannt und werden in den unterschiedlichsten Anwendungsgebieten eingesetzt.

So sind unter anderem hydraulische Stoßdämpfer bekannt, die eine Kolben-Zylinder-Anordnung aufweisen mit zwei Arbeitskammern, zwischen welchen ein flüssiges Medium strömt, das den Bremseffekt bewirkt. Derartige Dämpfer haben eine hohe Haftreibung, bedingt durch Kolbenstangen- und Kolbenabdichtungen, die einer sinnvollen Reduktion der Baugröße Grenzen setzt. Ferner sind sie sehr aufwendig und teuer in der Herstellung und werden daher nur für spezielle Anwendungen eingesetzt, bei denen Kosten eine untergeordnete Rolle spielen.

Für den Einsatz als Brems- und Dämpfungselement für bewegliche Möbelteile, insbesondere Schubladen, sind hydraulische Stoßdämpfer nicht oder nur bedingt geeignet.

Die Dichtung von Ölhydraulikdämpfern muss um einen Verlust des Öles zu vermeiden fast hermetisch dicht sein. Um dies zu erreichen, sind hochwertige Kolbenstangenoberflächen sowie stark anpressende Dichtlippen erforderlich, die zum einen sehr aufwendig und teuer sind und zum anderen hohe Reibung aufweisen, die teilweise die Einzugsvorrichtung der Schublade aufhebt. Zudem entsteht durch die Verdrängung des Volumens der Kolbenstange ein Überdruck im geschlossenen Zustand, der einer Einzugsvorrichtung ebenfalls entgegensteht. Diese Systeme haben kaum mehr Selbsteinzug oder verursachen große Öffnungskräfte für die Schubladen. Öldämpfer können besonders bei reibungsarmen Kolbenstangenabdichtungen auslaufen und verfrüht die Funktion aufgeben.

Alle Öldämpfer haben grundsätzlich nur eine Dämpfkurve die nur für einen engen Geschwindigkeits- und Massebereich angewendet werden kann. Schwere Schubladen oder Auszüge die mit hohen Geschwindigkeiten geschlossen werden können nicht mehr gedämpft werden, bzw. leichte langsame Schubladen bleiben stecken.

Bei Möbeln, insbesondere Schubladen und Möbeltüren, werden ebenfalls auf Reibung basierende Brems- und Dämpfungselemente meist in Verbindung mit Federelementen eingesetzt. Derartige Bremselemente sind in der DE 199 15 164 A1 oder der DE 197 17 937 A1 offenbart.

Es sind derzeit noch Pufferungen am Markt. Puffer bauen kaum Energie ab, sie dienen zwar etwas zur Geräuschmilderung, sind aber nicht geeignet, Energie in der benötigten Menge abzubauen.

Die DE 37 29 597 A offenbart ein Brems- und Dämpfungselement als Türschließeinrichtung, mit einem in einem zylindrischen Raum über eine Dichtung abdichtend geführten Kolben, wobei bei Bewegung des Kolbens in den Zylinder hinein ein Luftdruckaufbau in einem von Zylinder und Kolben umschlossenen Kompressionsraumes erfolgt. Weiterhin ist eine Ventileinrichtung vorgesehen, die eine Entlüftung des Kompressionsraumes ab einer vordefinierten Eintauchlänge des Kolbens in den Zylinder bewirkt. Die Ventileinrichtung besteht aus einem am Boden des Zylinders im Kompressionsraum befestigten Zapfen, der eine Durchgangsbohrung im Zentrum des Kolbens durchgreift und dort gleitend aufgenommen ist. Der Zapfen ist leicht konisch ausgebildet und wird im Durchmesser vom Boden des Zylinders in Richtung Durchgangsbohrung größer und dichtet diese zu Beginn des Einfahrens des Kolbens in den Zylinder über eine vordefinierte Teilstrecke ab. Taucht der Kolben tiefer in den Zylinder ein und damit der konusförmige Zapfen in die Durchgangsbohrung im Kolben, so entsteht dort ein immer größer werdender Ringspalt zwischen Durchgangsbohrung und Zapfen, Durch diesen Ringspalt entweicht die im Kompressionsraum befindliche unter Druck stehende Luft aus dem Zylinder ins Freie bis zum Druckausgleich. Um ein Durchschlagen des Kolbens zu vermeiden und den Kolben automatisch wieder in Ausgangsstellung aus dem Zylinder fahren zu können, arbeitet der Kolben gegen die Kraft einer Rückstellfeder, die den Zapfen als Schraubenfeder umgibt.

Die US 5,799,759 offenbart ein Brems- und Dämpfungselement allgemein für bewegliche Teile, mit einem in einem zylindrischen Raum abdichtend geführten Kolben, wobei bei Bewegung des Kolbens in den Zylinder hinein ein Druckaufbau in einem von Zylinder und Kolben umschlossenen Kompressionsraum erfolgt, wobei eine Kombination einer Dichtung mit-einer am und/oder im Kolben angeordneten Ventileinrichtung vorgesehen ist, und die Dichtung auf einem dem Kompressionsraum zugewandten Zapfen des Kolbens angeordnet ist, und die Ventileinrichtung teilweise an der Innenwand des Zylinders anliegt und eine Entlüftungsbohrung oder einen Entlüftungskanal umfasst, deren / dessen eines Ende in den Kompressionsraum und deren /dessen anderes Ende in einen Ventilhohlraum mündet, der von einer Dichtlippe eines Schiebeventils der Ventileinrichtung verschlossen bzw. geöffnet wird, so dass durch Reibungskräfte gesteuert eine Entlüftung des Kompressionsraumes bei Stillstand des Kolbens oder einer Bewegung des Kolbens entgegen der Schließrichtung erfolgt.

Die Aufgabe der Erfindung ist es, ein preiswert herzustellendes Brems- und Dämpfungselement für bewegliche Möbelteile vorzuschlagen, das in der Lage ist, eine Schublade oder Türfront eines Möbels so abzudämpfen, dass beim Schließvorgang keine Erschütterungen oder Schlaggeräusche auftreten. Der Funktionsbereich soll sich von der leeren langsam geschlossenen Schublade bis zu einem voll beladenen schnell geschlossenen Auszug erstrecken.

Die Lösung dieser Aufgabe erfolgt erfindungsgemäß durch die Merkmale des Patentanspruchs 1.

Wesentliches Merkmal des erfindungsgemäßen Brems- und Dämpfungselements ist, dass die Dichtung am vorderen freien Ende des Zapfens angeordnet ist und das Schiebeventil der Ventileinrichtung auf dem Zapfen des Kolbens zwischen der Dichtung und einem Kolbenbund des Kolbens angeordnet ist.

Grundlage dabei ist eine am und/oder im Kolben angeordnete Ventileinrichtung, die teilweise an der Zylinderwand anliegt und durch Reibungskräfte gesteuert eine Entlüftung des Kompressionsraumes bei Stillstand des Kolbens oder einer Bewegung des Kolbens entgegen der Schließrichtung bewirkt.

Hierdurch ergibt sich trotz einfachem und kostengünstigem Aufbau ein funktionssicheres und verschleißarmes Brems- und Dämpfungselement. Die vor der Ventilanordnung angeordnete Dichtung gewährleistet einen drucklosen Raum, in dem sich die Ventileinrichtung befindet. Dadurch wirken nur geringe Kräfte auf die Ventilanordnung.

Vorteilhafte Ausführungsformen und Weiterbildungen der Erfindung ergeben sich aus den abhängigen Patentansprüchen.

Die Abdichtung zwischen Kolben und Zylinder erfolgt durch eine Ringdichtung, die am freien Ende eines dem Kompressionsraum zugewandten Zapfens am Kolben angeordnet ist.

In einer bevorzugten Ausführungsform ist das vorzugsweise etwa ring- oder zylinderförmige, Schiebeventil am Zapfen des Kolbens verschiebbar angeordnet. Je nachdem ob sich der Kolben in den Zylinder hinein bewegt, stillsteht oder aus dem Zylinder herausbewegt verändert sich die Position des Schiebeventils auf dem Zapfen.

Dies wird vorzugsweise erreicht durch eine Gleitdichtung, die an der Innenwand des Zylinders anliegt und die Reibungskräfte zwischen Schiebeventil und Zylinderinnenwand hervorruft, die das Schiebeventil steuern.

Die Reibung zwischen Gleitdichtung und Innenwand des Zylinders muss größer sein, als die Reibung zwischen Grundkörper des Schiebeventils und dem Zapfen.

Die Dichtlippe des Schiebeventils wirkt mit einer zugeordneten Dichtfläche am Kolben zusammen.

Die Dichtlippe verschließt bzw. öffnet den Ventilhohlraum, wobei die Ventileinrichtung eine Entlüftungsbohrung umfasst, deren eines Ende in den Kompressionsraum und deren anderes Ende in den Ventilhohlraum mündet. Anstelle der Entlüftungsbohrung kann auch ein Entlüftungskanal verwendet werden, der außen am Zapfen angebracht ist.

In einer vorteilhaften Ausführungsform ist vorgesehen, die Dichtung und das Schiebeventil einstückig auszubilden, wobei die Teile durch ein elastisches Zwischenstück miteinander verbunden sind.

Ferner kann zwischen Kolben und Zylinder eine Rückstellfeder eingesetzt sein, so dass das Brems- und Dämpfungselement z.B. in Verbindung mit Scharnieren eingesetzt werden kann.

Die Innenwand des Zylinders kann vorzugsweise einen Überströmkanal aufweisen, der bei einer bestimmten Stellung des Kolbens die Wirkung der Dichtung außer Kraft setzt. Dies ist bei Schubladen vorteilhaft, die über eine sogenannte automatische Einzugsvorrichtung verfügen.

Bevorzugte Ausführungsbeispiele der Erfindung werden nachfolgend anhand von mehreren Zeichnungsfiguren beschrieben. Aus den Zeichnungen und ihrer Beschreibung ergeben sich weitere Merkmale, Vorteile und Anwendungsmöglichkeiten der Erfindung.

Es zeigt:
- Figur 1:: Einen Schnitt durch eine erste Ausführungsform des Brems- und Dämpfungselements;
- Figur 2:: Einen Schnitt durch eine zweite Ausführungsform des Brems- und Dämpfungselements;
- Figur 3:: Einen Schnitt durch eine dritte Ausführungsform des Brems- und Dämpfungselements;
- Figur 4:: Vergrößerte Darstellung der Ventilanordnung gemäss Figur 1 bei geschlossenem Schiebeventil;
- Figur 5:: Vergrößerte Darstellung der Ventilanordnung gemäss Figur 1 bei leicht geöffnetem Schiebeventil;
- Figur 6:: Vergrößerte Darstellung der Ventilanordnung gemäss Figur 1 bei vollständig geöffnetem Schiebeventil.

Die folgenden Beispiele beschreiben den Einsatz des Brems- und Dämpfungselements bei einer Schublade.

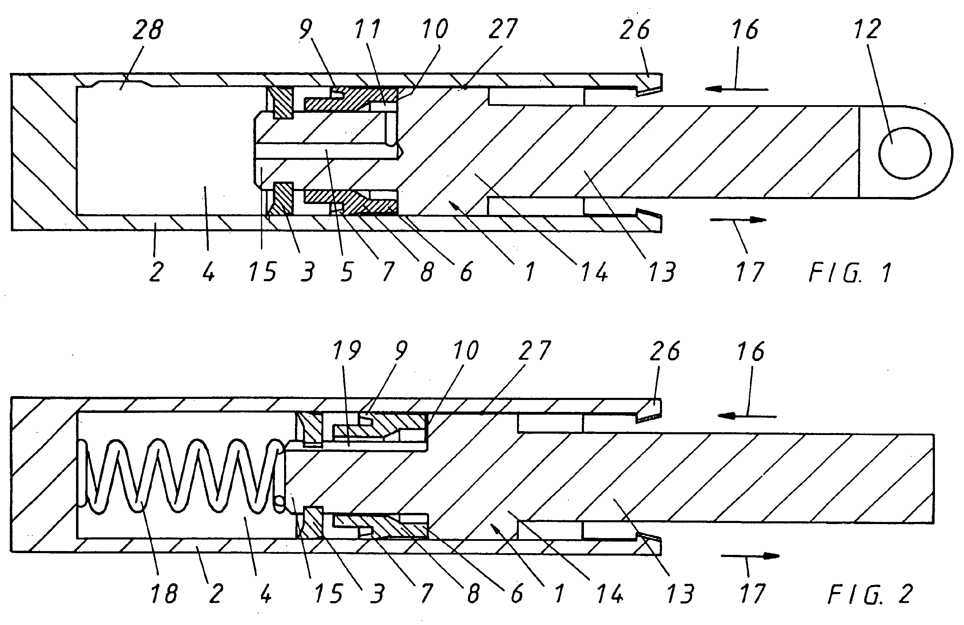

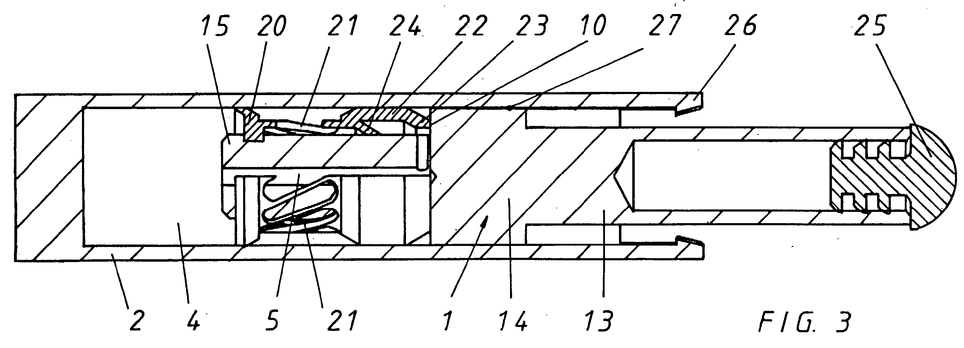

Gemäss Figur 1 umfasst das Brems- und Dämpfungselement einen Kolben 1, der in einem mit einem Sackloch versehenen Zylinder 2 verschiebbar angeordnet ist, wobei die Länge des Verschiebewegs des Kolbens 1 dem Weg der Schließautomatik der Schubladenführung angepasst ist. Der Kolben 1 bzw. der Kolbenbund 14, läuft mit loser Passung in dem Zylinder 2 und wird mittels einer Kolbenstange 13 betätigt. Ein Zapfen 15 ist gegenüberliegend der Kolbenstange 13 am Kolbenbund 14 angeordnet. Zwischen dem Kolbenbund 14 und der Innenwand des Zylinders 1 verbleibt ein luftdurchlässiger Spalt 27. Dieser grundlegende Aufbau findet sich auch in den Ausführungsbeispielen gemäss den Figuren 2 und 3 wieder.

Wie man in Figur 1 erkennt, ist am vorderen Ende des Zapfens 15 eine ringförmige Dichtung 3 angeordnet, die den Kolben 1 gegen die Innenwand des Zylinders 1 abdichtet. Bei Bewegung des Kolbens 1 in Pfeilrichtung 16 entsteht durch die Abdichtung ein Druck im Kompressionsraum 4 des Zylinders 1, der mit zunehmendem Kolbenweg stark zunimmt.

Auf dem Zapfen 15 ist ein Schiebeventil 8 angeordnet, welches sich frei axial entlang des Zapfens 15 zwischen der Dichtung 3 und dem Kolbenbund 14 bewegen kann. Dazu ist der am Außenumfang anliegende Grundköper des Schiebeventils derart ausgebildet, dass er gut auf dem Zapfen gleitet. Das Schiebeventil 8 weist eine Gleitdichtung 7 auf, die an der Innenwand des Zylinders anliegt. Die Reibung zwischen der Gleitdichtung 7 und der Innenwand des Zylinders 1 ist derart eingestellt, dass die erheblich größer ist als die Reibung zwischen Grundkörper des Schiebeventils 8 und dem Zapfen 15.

Der Zapfen 15 weist eine Entlüftungsbohrung 5 auf, deren eines Ende in den Kompressionsraum und deren anderes Ende in einen Ventilhohlraum 11 zwischen Zapfen 15 und Schiebeventil 8 mündet.

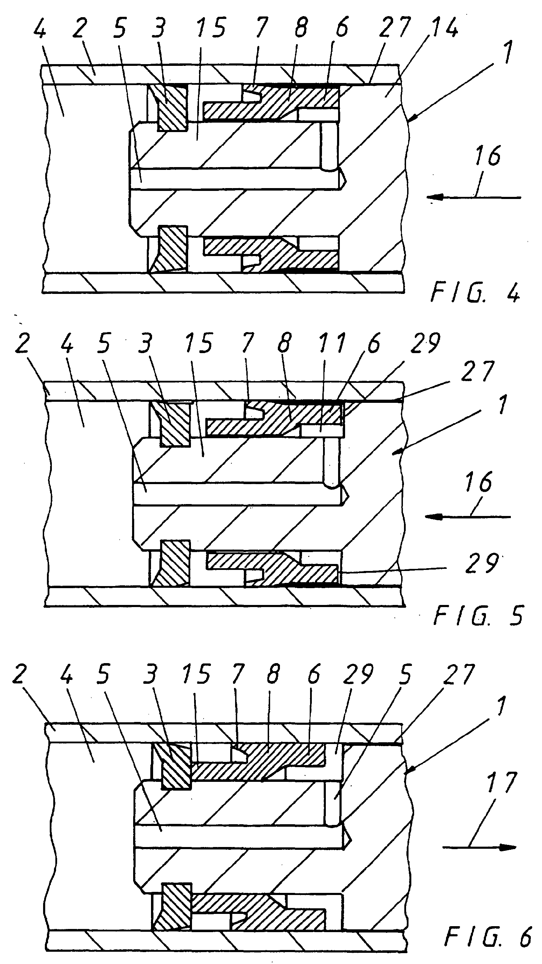

Bei Bewegung des Kolbens 1 in Pfeilrichtung 16 wird aufgrund der Reibung der Reibfläche 9 der Gleitdichtung 7 an der Innenwand des Zylinders 2 das Schiebeventil 8 bzw. dessen Dichtlippe 6 an die Dichtfläche 10 des Kolbenbunds 14 angedrückt. Dieser Zustand ist im einzelnen in Figur 4 dargestellt.

Somit wird die in den Ventilhohlraum 11 mündende Entlüftungsbohrung 5 durch die Ventildichtlippe 6 des Schiebeventils 8 verschlossen und es kann keine Luft aus dem Kompressionsraum 4 durch die Entlüftungsbohrung 5 entweichen.

Der im Schiebeventilraum 11 auftretende Druck verursacht durch die rundum fast oder ganz gleichen Querschnitte keine Verschiebekraft auf das Schiebeventil 8 wodurch dieses fast oder ganz ausschließüch durch die vorhin beschriebene Reibung gesteuert wird.

Wird der Kolben 1 weiter in Pfeilrichtung 16 bewegt, so erfolgt ein zunehmender Druckaufbau im Kompressionsraum 4, der eine Gegenkraft auf den Kolben 1 erzeugt. Die Gegenkraft kann auf die mit dem Befestigungsloch 12 mittels einer Koppeleinrichtung, z. B. Einzugsvorrichtung, oder durch einen Puffer 13 (Figur 3) angedockten Schublade 14 übertragen werden, wodurch diese abgebremst wird.

Dadurch gerät die Schublade ganz zum Stillstand oder fast zum Stillstand. Folglich wird die Gleitreibung der Reibfläche 9 der Gleitdichtung 7 an der Zylinderwand reduziert oder aufgehoben, bzw. durch den von der komprimierten Luft im Kompressionsraum 4 verursachten Rückstoß wird der Kolben 1 minimal (wenige 1/100stel Millimeter) in Pfeilrichtung 17 zurückgedruckt. Hingegen verbleibt das Schiebeventil 8 in seiner Position, da es durch die Reibung zwischen Reibfläche 9 und Zylinderwand festgehalten wird.

Dadurch löst sich die Dichtlippe 6 - wie es in Figur 5 dargestellt ist - etwas von der Dichtfläche 10 am Kolbenbund 14, es entsteht ein Spalt 29 und die komprimierte Luft kann aus dem Kompressionsraum 4 durch die Entlüftungsbohrung 5 vorbei an der Ventildichtlippe 6 durch den Spalt 29 und den Spalt 27 des Kolbenraumes ins Freie entweichen. Der Druck im Kompressionsraum 4 baut sich schlagartig ab.

Durch den sehr raschen Druckabbau im Kompressionsraum 4 wird der Rückstoß und die Kolbengegenkraft schlagartig gestoppt, wodurch der Kolben 1 und somit die Schublade stehen bleibt. Die in diesem Funktionsbereich üblicherweise angebrachten Einzugsvorrichtungen (durch Feder oder Schwerkraft) bringen die Schublade langsam in Endstellung.

Durch die Ausformung der Dichtfläche 10 und/oder der Ventildichtlippe 6 des Schiebeventils 8 sowie durch ein optional angebrachtes elastisches Zwischenstück 21 (Figur 3) kann eine gewisse Leckluftrate gewählt werden, die das saubere langsame Schließen der Schublade nach dem Dämpfvorgang ohne Dämpfwiderstand ermöglicht. In den letzten Millimetern des Schließweges kann durch einen Überströmkanal 28 eine völlige Außerkraftsetzung des Dämpfers erreicht werden, wodurch ein sattes Schließen der Schublade erfolgen kann.

In Figur 6 ist dargestellt, dass beim Öffnen der Schublade die Kolbenstange 1 durch die Schubladenkoppelvorrichtung (wie sie in der Einzugsautomatik der Schubladenführung vorhanden sein mag) oder mittels Rückstellfeder 18 in Pfeilrichtung 17 bewegt und wieder in Betriebsbereitschaft gebracht wird, wobei in diesem Betriebsfall das Schiebeventil 8 durch Reibung der Reibfläche 9 ständig im geöffneten Zustand gehalten wird, d.h. die Dichtlippe 6 des Schiebeventils 8 gibt die Entlüftungsbohrung 5 vollständig frei, der Spalt 29 erreicht seine maximale Größe. Dadurch ist völliger Druckausgleich beim öffnen der Schublade und somit keinerlei Behinderung durch erhöhte Öffnungskräfte vorhanden.

Durch Einsetzen einer Rückstellfeder 18 kann dieser Dämpfer auch separat für Schubladen oder Türfronten von mittels Scharnieren befestigten Türen verwendet werden.

Figur 2 zeigt den Einsatz eines Entlüftungskanals 19 an der Oberfläche des Zapfens 15 anstelle einer Entlüftungsbohrung, wie sie in den Figuren 1 und 3-6 dargestellt ist.

Ferner ist bei Figur 2 eine Rückstellfeder 18 vorgesehen, die den Kolben 1 des Brems- und Dämpfungselements bei Bedarf in seine Ausgangsstellung zurückdrückt.

Figur 3 zeigt eine Dichtung 20 und ein Schiebeventil 22, die mittels eines elastischen Zwischenstücks 21 einstückig miteinander verbunden sind. Das Schiebeventil weist neben der Dichtlippe 23 eine zusätzliche Gleitdichtung 24 zur Abdichtung des Ventilhohlraums 11 gegenüber dem Zapfen 15 auf. Mittels des elastischen Zwischenstücks kann die "Charakteristik" des Schiebeventils 22 eingestellt werden.

### Zeichnungslegende

- 1: Kolben
- 2: Zylinder
- 3: Dichtung
- 4: Kompressionsraum
- 5: Entlüftungsbohrung
- 6: Dichtlippe
- 7: Gleitdichtung
- 8: Schiebeventil
- 9: Reibfläche
- 10: Dichtfläche
- 11: Ventilhohlraum
- 12: Befestigungsloch
- 13: Kolbenstange
- 14: Kolbenbund
- 15: Kolbenzapfen
- 16: Pfeilrichtung
- 17: Pfeilrichtung
- 18: Rückstellfeder
- 19: Entlüftungskanal
- 20: Dichtung
- 21: elastisches Zwischenstück
- 22: Schiebeventil
- 23: Dichtlippe
- 24: Gleitdichtung
- 25: Puffer
- 26: Kralle
- 27: Spalt
- 28: Überströmkanal
- 29: Spalt

## Patentansprüche

1. Brems- und Dämpfungselement für bewegliche Möbelteile mit einem in einem zylindrischen Raum abdichtend geführten Kolben (1), wobei bei Bewegung des Kolbens (1) in den Zylinder (2) hinein ein Druckaufbau in einem von Zylinder (2) und Kolben (1) umschlossenen Kompressionsraum (4) erfolgt, wobei eine Kombination einer Dichtung (3; 20) mit einer am und/oder im Kolben (1) angeordneten Ventileinrichtung vorgesehen ist, und die Dichtung (3; 20) auf einem dem Kompressionsraum (4) zugewandten Zapfen (15) des Kolbens (1) angeordnet ist, und die Ventileinrichtung teilweise an der Innenwand des Zylinders (2) anliegt und eine Entlüftungsbohrung (5) oder einen Entlüftungskanal (19) umfasst, deren /dessen eines Ende in den Kompressionsraum (4) und deren / dessen anderes Ende in einen Ventilhohlraum (11) mündet, der von einer Dichtlippe (6) eines Schiebeventils (8) der Ventileinrichtung verschlossen bzw. geöffnet wird, so dass durch Reibungskräfte gesteuert eine Entlüftung des Kompressionsraumes (4) bei Stillstand des Kolbens (1) oder einer Bewegung des Kolbens (1) entgegen der Schließrichtung (16) erfolgt, **dadurch gekennzeichnet, dass** die Dichtung (3; 20) am vorderen freien Ende des Zapfens (15) angeordnet ist und das Schiebeventil (8) der Ventileinrichtung auf dem Zapfen (15) des Kolbens (1) zwischen der Dichtung (3; 20) und einem Kolbenbund (14) des Kolbens (1) angeordnet ist.

2. Brems- und Dämpfungselement nach Anspruch 1, **dadurch gekennzeichnet, dass** das Schiebeventil (8) auf dem Zapfen (15) des Kolbens verschiebbar angeordnet ist.

3. Brems- und Dämpfungselement nach einem der Ansprüche 1 oder 2, **dadurch gekennzeichnet, dass** das Schiebeventil (8) eine Gleitdichtung (7) aufweist, die an der Innenwand des Zylinders (1) anliegt.

4. Brems- und Dämpfungselement nach Anspruch 3, **dadurch gekennzeichnet, dass** die Reibung zwischen Gleitdichtung (7) und Innenwand des Zylinders (2) größer ist als die Reibung zwischen Grundkörper des Schiebeventils (8) und dem Zapfen (15).

5. Brems- und Dämpfungselement nach einem der Ansprüche 1 bis 4, **dadurch gekennzeichnet, dass** die Dichtlippe (6) des Schiebeventils mit einer zugeordneten Dichtfläche (10) am Kolben (1) zusammenwirkt.

6. Brems- und Dämpfungselement nach einem der Ansprüche 1 bis 5, **dadurch gekennzeichnet, dass** die Dichtung (20) des Kolbens (1) und das Schiebeventil (22) einstückig ausgebildet und durch ein elastisches Zwischenstück (21) miteinander verbunden sind.

7. Brems- und Dämpfungselement nach einem der Ansprüche 1 bis 6, **dadurch gekennzeichnet, dass** zwischen Kolben (1) und Zylinder (2) eine Rückstellfeder (18) eingesetzt ist.

8. Brems- und Dämpfungselement nach einem der Ansprüche 1 bis 7, **dadurch gekennzeichnet, dass** die Innenwand des Zylinders (2) einen Überströmkanal (28) aufweist, der bei einer bestimmten Stellung des Kolbens (1) die Wirkung der Dichtung (3; 20) außer Kraft setzt.

## Claims

1. Braking and damping element for movable furniture parts comprising a piston (1) guided in a sealing manner in a cylindrical chamber, wherein, on movement of the piston (1) into the cylinder (2), a pressure build-up occurs in a compression chamber (4) surrounded by the cylinder (2) and piston (1), wherein a combination of a seal (3; 20) with a valve device arranged on and/or in the piston (1) is provided, and the seal (3; 20) is arranged on a lug (15) of the piston (1) facing the compression chamber (4) and the valve device partially rests on the inner wall of the cylinder (2) and comprises a venting bore (5) or a venting channel (19), one end of which bore or channel opens into the compression chamber (4) and the other end of which opens into a valve hollow (11), which is closed or opened by a sealing lip (6) of a slide valve (8) of the valve device, so that, controlled by frictional forces, the compression chamber (4) is vented when the piston (1) is stationary or the piston (1) moves counter to the closing direction (16), **characterised in that** the seal (3; 20) is arranged at the leading free end of the pin (15) and the slide valve (8) of the valve device is arranged on the lug (15) of the piston (1) between the seal (3; 20) and a piston shoulder (14) of the piston (1).

2. Braking and damping element according to claim 1, **characterised in that** the slide valve (8) is displaceably arranged on the lug (15) of the piston.

3. Braking and damping element according to either of claims 1 or 2, **characterised in that** the slide valve (8) has a sliding seal (7), which rests on the inner wall of the cylinder (1).

4. Braking and damping element according to claim 3, **characterised in that** the friction between the sliding seal (7) and inner wall of the cylinder (2) is greater than the friction between the basic body of the slide valve (8) and the lug (15).

5. Braking and damping element according to any one of claims 1 to 4, **characterised in that** the sealing lip (6) of the slide valve cooperates with an associated sealing face (10) on the piston (1).

6. Braking and damping element according to any one of claims 1 to 5, **characterised in that** the seal (20) of the piston (1) and the slide valve (22) are configured in one piece and connected to one another by an elastic intermediate piece (21).

7. Braking and damping element according to any one of claims 1 to 6, **characterised in that** a restoring spring (18) is inserted between the piston (1) and cylinder (2).

8. Braking and damping element according to any one of claims of 1 to 7, **characterised in that** the inner wall of the cylinder (2) has an overflow channel (28), which, in a specific position of the piston (1), cancels the action of the seal (3; 20).

## Revendications

1. Elément de freinage et d'amortissement pour des pièces de meubles mobiles comprenant un piston (1) guidé sans jeu dans un logement cylindrique, une montée de pression ayant lieu dans une chambre de compression (4) entourée par le cylindre (2) et le piston (1) en cas de déplacement du piston (1) vers l'intérieur du cylindre (2), une combinaison d'un joint (3 ; 20) et d'un dispositif à soupape disposé contre et/ou dans le piston (1) étant prévue, le joint (3 ; 20) étant disposé sur une tête (15) du piston (1) dirigée vers la chambre de compression (4), le dispositif à soupape reposant partiellement contre la paroi intérieure du cylindre (2) et comprenant un alésage de purge d'air (5) ou un canal de purge d'air (19) dont une extrémité débouche dans la chambre de compression (4) et dont l'autre extrémité débouche dans une cavité de soupape (11) obturée ou ouverte par une lèvre d'étanchéité (6) d'un tiroir (8) du dispositif à soupape, de manière à déclencher par forces de friction une purge d'air de la chambre de compression (4) à l'arrêt du piston (1) ou un mouvement du piston (1) opposé au sens de fermeture (16), **caractérisé en ce que** le joint (3 ; 20) est disposé à l'extrémité antérieure libre de la tête (15) et le tiroir (8) du dispositif à soupape sur la tête (15) du piston (1) est disposé entre le joint (3 ; 20) et un épaulement (14) du piston (1).

2. Elément de freinage et d'amortissement selon la revendication 1, **caractérisé en ce que** le tiroir (8) est coulissant sur la tête (15) du piston.

3. Elément de freinage et d'amortissement selon l'une des revendications 1 ou 2, **caractérisé en ce que** le tiroir (8) présente un joint coulissant (7) reposant contre la paroi intérieure du cylindre (1).

4. Elément de freinage et d'amortissement selon la revendication 3, **caractérisé en ce que** le frottement entre le joint coulissant (7) et la paroi intérieure du cylindre (2) est supérieur au frottement entre le corps principal du tiroir (8) et la tête (15).

5. Elément de freinage et d'amortissement selon l'une des revendications 1 à 4, **caractérisé en ce que** la lèvre d'étanchéité (6) du tiroir coopère avec une surface d'étanchéité (10) correspondante du piston (1).

6. Elément de freinage et d'amortissement selon l'une des revendications 1 à 5, **caractérisé en ce que** le joint (20) du piston (1) et le tiroir (22) sont formés d'une seule pièce et raccordés entre eux par une pièce intercalaire élastique (21).

7. Elément de freinage et d'amortissement selon l'une des revendications 1 à 6, **caractérisé en ce qu'**un ressort de rappel (18) est mis en place entre le piston (1) et le cylindre (2).

8. Elément de freinage et d'amortissement selon l'une des revendications 1 à 7, **caractérisé en ce que** la paroi intérieure du cylindre (2) présente un canal de décharge (28) annulant l'effet du joint (3 ; 20) dans une position définie du piston (1).
